# EUROPEAN PATENT SPECIFICATION

(11) **EP 1 885 138 B1**
(45) Date of publication and mention of the grant of the patent: **06.06.2012**
(21) Application number: 06300790.0
(22) Date of filing: 11.07.2006
(51) Int. Cl.: H04Q 3/00

(54) **Signalling gateway**
Signalisierungsdurchgangssystem
Passerelle de signalisation

(43) Date of publication of application: 06.02.2008
(73) Proprietor: HEWLETT-PACKARD DEVELOPMENT COMPANY, L.P., Houston, TX 77070 (US)
(72) Inventor: Bouckaert, Philippe, 06901, Sophia-Antipolis (FR); Eynaud, Jean-Louis, 06901 Sophia-Antipolis (FR); Schneider, Yves, 06901, Sophia-Antipolis (FR)
(74) Representative: Harrison Goddard Foote

(56) References cited:
- EP-A- 0 164 377
- US-A1- 2001 055 380

## Description

### Field of the Invention

The invention relates to a signalling gateway and a system including a signalling gateway and a monitoring entity.

### Background of the Invention

A common problem when connecting networks is that of ensuring messages from one network are correctly routed to a destination on the other network. A particular example of this is in the connection of networks using Internet Protocol (IP) to the existing telephone switched circuit network (PSTN). The infrastructure uses very different technologies and protocol: for example a PSTN conventionally uses the SS7 protocol. It is desirable, where two such networks are linked, to reliably provide PSTN signalling over the IP network.

An approach to providing a reliable connection between IP and SS7 networks has been proposed by the Internet Engineering Task Force (IETF). This includes M3UA, which is a protocol for the transport of any MTP3 signalling over IP, and SUA which defines the protocol for the transport of any SCCP User Part signalling over IP. Two main entities are defined: the signalling gateway ("SG"), which is the connection point between the SS7 and IP networks, and the application server (AS) which is the software application provided on the IP network which it is desired to make available over the SS7 network. The protocols may be used to connect SS7-based signalling end points (SEP) with an IP based AS thus allowing SS7 networks to access IP based applications. An example can be found in EP 0 164 377.

A function performed by the signalling gateway is to receive SS7 signalling messages and direct them to the appropriate AS. To do so, the SG identifies a routing key (RK) defined by the M3UA or SUA protocol, which uniquely identifies the AS in accordance with parameters in the SS7 message. In general, the RK parameters are found in the header of the SS7 message.

Consequently, the signalling gateway acts as a signal transfer point on the SS7 network. It is desirable to provide screening or monitoring services at the signalling gateway, but such services are not easily configurable because of the STP architecture. Because of the flexibility available at an application server provided on the IP network, it would be desirable to provide adaptable monitoring services on an application server. However, because each application server will have a separate destination point code, and will be identified with that destination point code, it would not be possible to route all or a subset of messages passing through the signalling gateway to one application server.

### Summary of the Invention

According to a first aspect of the invention, we provide a signalling gateway for connecting a first network to a second network, the signalling gateway being operable to store a plurality of routing keys, wherein at least one of the routing keys comprises monitoring destination information associated with a monitoring entity, the signalling gateway being operable to receive a message via the first network, the message comprising message destination information identifying a recipient entity, compare the destination information and the routing key and, when the message destination information matches the monitoring destination information, transmit the message to the monitoring entity on the second network.

The monitoring entity may comprise an application server.

If the monitoring entity is not available, the signalling gateway may be operable to transmit the message to the recipient entity in accordance with the message destination information.

The message destination information may comprise a destination point code.

The monitoring destination information may comprise one or more destination point codes, and the message may be sent to the monitoring entity if the message destination point code matches one of the one or more destination point codes in the monitoring destination information.

The signalling gateway may be operable to forward all messages to the monitoring entity if indicated by the monitoring destination information.

The signalling gateway does not transmit traffic management messages relating to the monitoring entity to an originating entity which sent the message to the signalling gateway.

The first network may comprise an SS7 signalling network and the second network may comprise an IP network.

According to a second aspect of the invention, we provide a system comprising a signalling gateway for connecting a first network to a second network according to the first aspect of the invention and a monitoring entity provided on the second network, wherein on receipt of the message the monitoring entity may be operable to perform a desired action and forward the message in accordance with the destination information.

### Brief Description of the Drawings

An embodiment of the invention will now be described by way of example only with reference to the accompanying drawings wherein;
Figure 1 is a diagrammatic illustration of a network including a signalling gateway embodying the present invention,
Figure 2 is a diagrammatic illustration of the architecture of the network of Figure 1,
Figure 3 is a flow diagram illustrating the operation of a signalling gateway,
Figure 4 is a further flow diagram illustrating the operation of a signalling gateway, and
Figure 5 is a flow diagram illustrating an operation of a monitoring entity.

### Detailed Description of the Preferred Embodiments

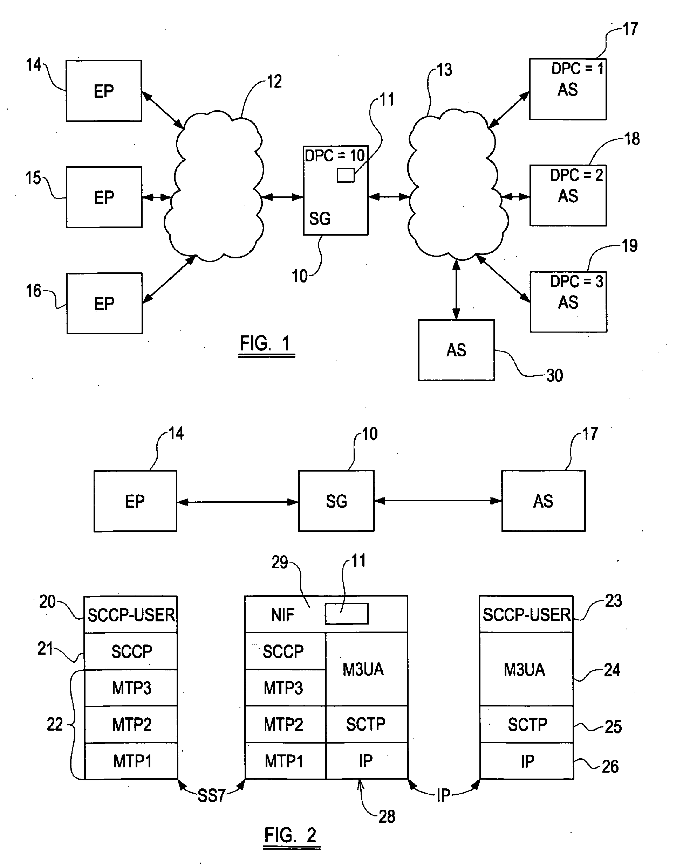

Referring to Figure 1, a signalling gateway embodying the present invention is shown at 10, provided with a routing key interpreter 11. The signalling gateway 10 is operable to communicate over a first network 12 and send and receive messages to and from end points on the network 12 using a first protocol, in this example using the SS7 protocol. The signalling gateway 10 is also able to communicate over a second network 13, in this example using the IP protocol. The signalling gateway 10 is operable to send and receive messages via the first network 12 from a plurality of end points 14, 15, 16, and to transmit and receive messages over the second network 13 from a plurality of application servers 17, 18, 19. As best seen in Figure 2, in this example, the protocols used for transmitting messages over the first network 12 comprise a Signalling Connection Control Part (SCCP) User Part 20 over the SCCP 21 and then the appropriate Message Transfer Protocol (MTP) levels shown at 22. The application servers transmit messages using an SCCP User Part shown at 23 over M3UA 24, and use the Stream Control Transmission Protocol (SCTP) 25 over the Internet Protocol (IP) layer 26.

The signalling gateway architecture generally shown at 28 has a nodal interworking function (NIF) illustrated at 29 to convert SS7 messages to M3UA messages and vice versa, using the routing key interpreter generally indicated at 11. The signalling gateway 10 may sit between any other appropriate pair of protocols as desired; for example, the signalling gateway 10 may be operable to convert SS7 signals to M3UA messages or otherwise as desired, and any other MTP user part such as ISUP may be used in place of SCCP.

Each application server 17, 18, 19 has a unique routing key associated with it. The routing keys maybe configured statically at the application server 17, 18, 19 and at the signalling gateway 10, or may be configured statically at the application server 17, 18, 19 which then dynamically registers itself at the signalling gateway 10 by means of routing key management messages. The routing keys are stored in a store shown at 11a. To match a routing key to an incoming message, the routing key interpreter 11 is operable to read a message and identify the values of certain parameters within the message. The routing key interpreter 11 then identifies the routing key that matches the values of the parameters and returns an output.

Each application server 17, 18, 19 has a destination point code DPC associated with it, and the value of the destination point code is stored in the routine key store at 11 a on the signalling gateway 10. Similarly, each end point 14, 15, 16 will have an associated destination point code.

The network 12 further has an application server 30 which comprises a monitoring entity. The application server 30 may be used to provide any appropriate function, such as monitoring messages, screening messages or performing any other function as desired. By providing these functions as an application server platform, it will be apparent that desired function may be simply provided on the standard platform.

To allow for routing of the messages through the application server 30, the routing key associated with the server 30 will comprise monitoring destination information associated with the application server 30. In the present example, this comprises a list of one or more destination point codes. Optionally, the routing key may also contain a destination point code corresponding to the application server 30, a list of one or more service indicators, an originating point code list containing one or more SS7 OPC entries, a network appearance parameter field identifying the SS7 network context for the routing key, or indeed any other parameter as desired. The routing key corresponding to the application server 30 may be registered with the signalling gateway in any appropriate manner as desired, for example by being configured statically at the application server or by an appropriate dynamic registration process which identifies the monitoring destination information and registers it with the signalling gateway 10 as part of the routing key.

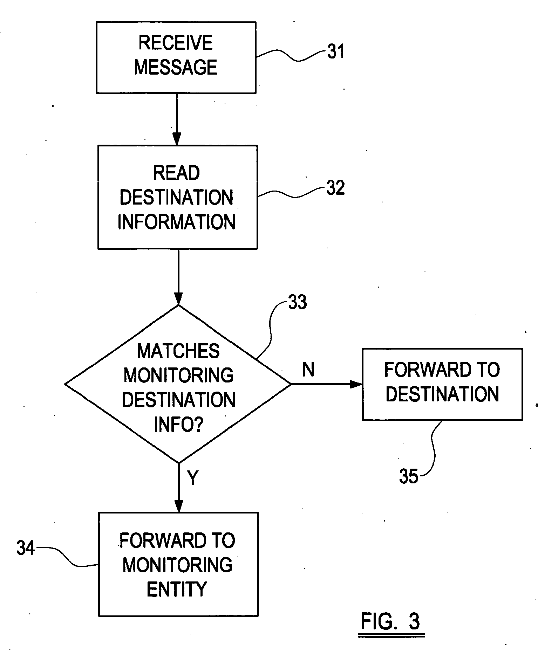

The signalling gateway 10 thus operates as shown in Figure 3. At step 31, the signalling gateway 10 receives a message from an end point 14 via the first network 12, and at step 32 reads the message destination information included in the message, in this example the destination point code. At step 33, the routing key interpreter 11 will match the destination point code with the stored routing keys held on the routing key store 11 a, and will check whether it is one of the destination point codes held in the monitoring destination information associated with the application server 30. If yes, then at step 34 the message is forwarded to the application server 30. Otherwise, at step 35, the signalling gateway 10 will forward the message to the end point 15, 16 or application server 17, 18, 19 in accordance with the destination point code.

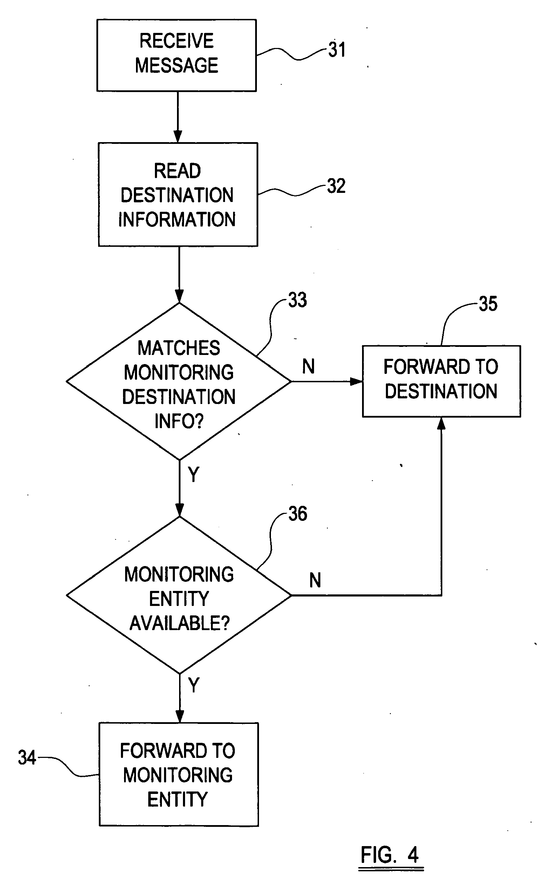

As shown in Figure 4, the signalling gateway 10 will continue to read messages even if the application server 30 is not available. Steps 31, 32, 33, 34 and 35 are as shown in Figure 3, but at step 36 the signalling gateway 10 is operable to check whether or not the application server 30 is active. If not, then at step 35 the message is simply routed to the application server 17, 18, 19 associated with the destination point code as before, and if the application server 30 is available, then the message is routed to the application server 30 as before.

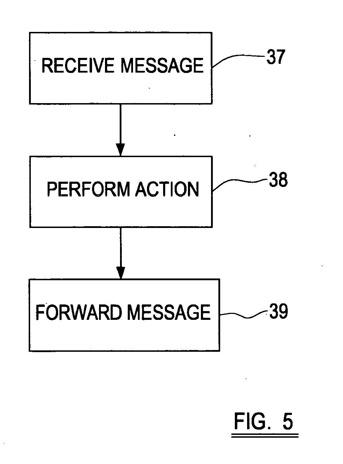

The application server 30, as illustrated in Figure 5 at step 37, will receive the message, and at step 38 perform an appropriate action, for example a validation step or other monitoring step or action as required. Subsequently, at step 39 the application server 30 will forward the message. In this example, the message is forwarded to the application server 17, 18, 19 identified in the destination information in the message, but it will be apparent that the message may be forwarded elsewhere depending on the action performed in step 37.

The signalling gateway 10 and monitoring entity 30 as described herein thus allows messages to be transparently routed to an application server 30 to provide monitoring, screening or other services and then forwarded on to the destination, thus overcoming the limitations provided by screening services at the signalling gateway 10. The routing of the message through the application server 30 is transparent to the originating and destination entities. The provision of the monitoring destination information in the routing key allows the messages to be routed with a high degree of flexibility. Thus in the example of Figure 1, the monitoring destination information may only identify destination point codes 2 and 3, so that messages addressed to application servers 18, 19 are routed via application server 30, whilst messages transmitted to application server 17 are not passed to the application server 30. It might even be envisaged that all messages passing through the signalling gateway 10 could be routed through the application server 30, for example by including a null field in the monitoring destination information in the routing key, or including some other indication that all messages are to be passed to the application server 30. It might also be envisaged that there are multiple monitoring entities provided as part of the second network 13, for example a first application server to receive all ISUP messages and a second server to receive all SCCP traffic.

To further provide for transparency, the signalling gateway 10 will not send any traffic management messages for example, when the application server 30 is unavailable, the signalling gateway will not send a TFP (transfer prohibited) message through the SS7 network and will only forward the SS7 incoming messages to the identified destination. If the application server 30 becomes available, the signalling gateway 10 will not transmit any TFA (transfer allowable) message to the SS7 network 12, but again will simply route all messages directed to the point codes listed in the monitoring destination information to the application server 30.

The signalling gateway 10 may even act purely as an STP, routing messages between end points 14, 15, 16. The signalling gateway 10 will thus appear as an enhanced STP, the additional services being provided by the application server 30.

Although the message described above particularly refers to the M3UA protocol, it will be apparent that the invention may be used with the M3UA protocol issued to a similar routing key procedure, or indeed any other protocol allowing interfacing of messages between two networks as desired.

In the present specification "comprise" means "includes or consists of" and "comprising" means "including or consisting of".

## Claims

1. A signalling gateway for connecting a first network to a second network, the signalling gateway being operable to store a plurality of routing keys, wherein at least one of the routing keys comprises monitoring destination information associated with a monitoring entity, the signalling gateway being operable to;
receive a message via the first network, the message comprising message destination information identifying a recipient entity,
compare the destination information and the routing key and, when the message destination information matches the monitoring destination information,
transmit the message to the monitoring entity on the second network.

2. A signalling gateway according to claim 1 wherein the monitoring entity comprises an application server.

3. A signalling gateway according to claim 1 or claim 2 operable, if the monitoring entity is not available, to transmit the message to the recipient entity in accordance with the destination information.

4. A signalling gateway according to any one of the preceding claims wherein the message destination information comprises a destination point code.

5. A signalling gateway according to claim 4 wherein the monitoring destination information comprises one or more destination point codes, and wherein the message is sent to the monitoring entity if the message destination point code matches one of the one or more destination point codes in the monitoring destination information.

6. A signalling gateway according to any one of the preceding claims wherein the signalling gateway is operable to forward all messages to the monitoring entity if indicated by the monitoring destination information.

7. A signalling gateway according to any one of the preceding claims wherein the signalling gateway does not transmit traffic management messages relating to the monitoring entity to an originating entity which sent the message to the signalling gateway.

8. A signalling gateway according to any one of the preceding claims wherein the first network comprises an SS7 signalling network and wherein the second network comprises an IP network.

9. A system comprising a signalling gateway for connecting a first network to a second network and a monitoring entity provided on the second network, the signalling gateway comprising a signalling gateway according to any one of claims 1 to 8, wherein
on receipt of the message the monitoring entity is operable to perform a desired action and,
forward the message in accordance with the destination information.

## Patentansprüche

1. Signalisierungs-Gateway zur Verbindung eines ersten Netzwerks mit einem zweiten Netzwerk, wobei das Signalisierungs-Gateway so funktionsfähig ist, das es eine Mehrzahl von Routing-Schlüsseln speichert, wobei mindestens einer der Routing-Schlüssel Überwachungszielinformationen umfasst, die einer Überwachungseinheit zugeordnet sind, wobei das Signalisierungs-Gateway so funktionsfähig ist, dass es:
eine Nachricht über das erste Netzwerk empfängt, wobei die Nachricht Nachrichtenzielinformationen umfasst, welche eine Empfängereinheit identifizieren;
die Zielinformationen und den Routing-Schlüssel vergleicht, und wenn die Nachrichtenzielinformationen mit den Überwachungszielinformationen übereinstimmen,
die Nachricht an die Überwachungseinheit in dem zweiten Netzwerk übermittelt.

2. Signalisierungs-Gateway nach Anspruch 1, wobei die Überwachungseinheit einen Anwendungsserver umfasst.

3. Signalisierungs-Gateway nach Anspruch 1 oder Anspruch 2, wobei dieses. wenn die Überwachungseinheit nicht verfügbar ist, so funktionsfähig ist, dass die Nachricht gemäß den Zielinformationen an die Empfängereinheit übermittelt wird.

4. Signalisierungs-Gateway nach einem der vorstehenden Ansprüche, wobei die Nachrichtenzielinformationen einen Zielpunktcode umfassen.

5. Signalisierungs-Gateway nach Anspruch 4, wobei die Überwachungszielinformationen einen oder mehrere Zielpunktcodes umfassen, und wobei die Nachricht an die Überwachungseinheit gesendet wird, wenn der Nachrichtenzielpunktcode mit einem oder mehreren Zielpunktcodes in den Überwachungszielinformationen übereinstimmt.

6. Signalisierungs-Gateway nach einem der vorstehenden Ansprüche, wobei das Signalisierungs-Gateway so funktionsfähig ist, dass es alle Nachrichten an die Überwachungseinheit weiterleitet, wenn dies durch die Überwachungszielinformationen angezeigt wird.

7. Signalisierungs-Gateway nach einem der vorstehenden Ansprüche, wobei das Signalisierungs-Gateway keine Traffic-Managementnachrichten, die sich auf die Überwachungseinheit beziehen, an eine Ausgangseinheit übermittelt, welche die Nachricht an das Signalisierungs-Gateway gesendet hat.

8. Signalisierungs-Gateway nach einem der vorstehenden Ansprüche, wobei das erste Netzwerk ein SS7-Signalisierungsnetzwerk handelt, und wobei das zweite Netzwerk ein IP-Netzwerk umfasst.

9. System, das ein Signalisierungs-Gateway zur Verbindung eines ersten Netzwerks mit einem zweiten Netzwerk umfasst, und wobei eine Überwachungseinheit in dem zweiten Netzwerk vorgesehen ist, wobei das Signalisierungs-Gateway ein Signalisierungs-Gateway nach einem der Ansprüche 1 bis 8 umfasst wobei:
die Überwachungseinheit nach dem Empfang der Nachricht so funktionsfähig ist, dass sie eine gewünschte Aktion ausführt; und wobei
die Nachricht gemäß den Zielinformationen weitergeleitet wird.

## Revendications

1. Passerelle de signalisation pour connecter un premier réseau à un second réseau, la passerelle de signalisation pouvant fonctionner pour stocker une pluralité de clés de routage, dans laquelle au moins l'une des clés de routage comprend des informations de destination de contrôle associées à une entité de contrôle, la passerelle de signalisation pouvant fonctionner pour :
recevoir un message via le premier réseau, le message comprenant des informations de destination de message identifiant une entité destinataire,
comparer les informations de destination et la clé de routage et, lorsque les informations de destination de message correspondent aux informations de destination de contrôle,
transmettre le message à l'entité de contrôle sur le second réseau.

2. Passerelle de signalisation selon la revendication 1, dans laquelle l'entité de contrôle comprend un serveur d'application.

3. Passerelle de signalisation selon la revendication 1 ou 2 pouvant fonctionner, si l'entité de contrôle n'est pas disponible, pour transmettre le message à l'entité destinataire conformément aux informations de destination.

4. Passerelle de signalisation selon l'une quelconque des revendications précédentes, dans laquelle les informations de destination de message comprennent un code de point de destination.

5. Passerelle de signalisation selon la revendication 4, dans laquelle les informations de destination de contrôle comprennent un ou plusieurs codes de point de destination, et dans laquelle le message est envoyé à l'entité de contrôle si le code de point de message de destination correspond à l'un du ou des codes de point de destination dans les informations de destination de contrôle.

6. Passerelle de signalisation selon l'une quelconque des revendications précédentes, dans laquelle la passerelle de signalisation peut fonctionner pour transmettre tous les messages à l'entité de contrôle si indiqué par les informations de destination de contrôle.

7. Passerelle de signalisation selon l'une quelconque des revendications précédentes, dans laquelle la passerelle de signalisation ne transmet pas des messages de gestion de trafic relatifs à l'entité de contrôle à une entité d'origine qui a envoyé le message à la passerelle de signalisation.

8. Passerelle de signalisation selon l'une quelconque des revendications précédentes, dans laquelle le premier réseau comprend un réseau de signalisation SS7 et dans laquelle le second réseau comprend un réseau IP.

9. Système comprenant une passerelle de signalisation pour connecter un premier réseau à un second réseau et une entité de contrôle prévue sur le second réseau, la passerelle de signalisation comprenant une passerelle de signalisation selon l'une quelconque des revendications 1 à 8, dans lequel
à la réception du message, l'entité de contrôle peut fonctionner pour effectuer une action souhaitée et,
transmettre le message conformément aux informations de destination.
